# EUROPÄISCHE PATENTSCHRIFT

(11) **EP 0 836 128 B1**
(45) Veröffentlichungstag und Bekanntmachung des Hinweises auf die Patenterteilung: **02.06.1999**
(21) Anmeldenummer: 96116338.3
(22) Anmeldetag: 11.10.1996
(51) Int. Cl.: G05B 19/41

(54) **Steuerungsverfahren zur Bewegungsführung einer numerisch gesteuerten industriellen Bearbeitungsmaschine**
Control method for motion operation in a numerically controlled industrial machining apparatus
Méthode de commande de déplacement d'une machine d'usinage industrielle à commande numérique

(43) Veröffentlichungstag der Anmeldung: 15.04.1998
(73) Patentinhaber: SIEMENS AKTIENGESELLSCHAFT, 80333 München (DE)
(72) Erfinder: Puchtler, Thomas, Dipl.-Math., 91077 Neunkirchen a.B. (DE); Weiss, Volker, Dipl.-Inform., 90763 Fürth (DE); Greiner, Günther, Dr. habil., 91341 Röttenbach (DE); Seidel, Hans-Peter, Prof. Dr., 91088 Bubenreuth (DE)

(56) Entgegenhaltungen:
- EP-A- 0 384 925
- EP-A- 0 567 195
- DE-A- 4 430 003
- IEEE COMPUTER GRAPHICS AND APPLICATIONS, Bd. 12, Nr. 3, Mai 1992, LOS ALAMITOS, CA, USA, Seiten 60-68, XP000281874 CHOU JIN J. ET AL.: "DATA REDUCTION USING CUBIC RATIONAL B-SPLINES"
- COMPUTER AIDED DESIGN, Bd. 26, Nr. 1, Januar 1994, JORDAN HILL, OXFORD, GB, Seiten 17-28, XP000423004 PIEGL LES ET AL.: "SOFTWARE-ENGINEERING APPROACH TO DEGREE ELEVATION OF B-SPLINE CURVES"
- COMPUTER AIDED DESIGN, Bd. 24, Nr. 8, August 1992, LONDON, GB, Seiten 445-453, XP000290601 TILLER WAYNE: "KNOT-REMOVAL ALGORITHMS FOR NURBS CURVES AND SURFACES"
- COMPUTER AIDED DESIGN, Bd. 21, Nr. 8, Oktober 1989, LONDON, GB, Seiten 509-518, XP000088133 PIEGL LES: "MODIFYING THE SHAPE OF RATIONAL B-SPLINES. PART 1: CURVES"

## Beschreibung

Die Erfindung bezieht sich auf ein Steuerungsverfahren zur Bewegungsführung einer numerisch gesteuerten industriellen Bearbeitungsmaschine wie einer Werkzeugmaschine, einem Roboter oder dergleichen, wobei eine ideale Bewegungsbahn in unmittelbar aufeinanderfolgende lineare Feinwegabschnitte, sogenannte Linearsatze, aufgelöst ist, zu denen Raumpunkte sämtlicher Orte der idealen Bewegungsbahn gespeichert vorliegen, wobei die Linearsatze durch Splines approximiert werden, indem Splinesegmente als interpolierbare Bewegungsabschnitte bestimmt werden, wobei sich die Gesamtheit der aneinandergefügten Splinesegmente mit einer vorgebbaren Lagetoleranz an die ideale Bewegungsbahn annähert.

Im Werkzeug- und Formenbau wird für die Bearbeitung von Werkstücken in der Arbeitsvorbereitung (z.B. CAM) die räumliche Bewegungsbahn des Werkzeuges als eine Folge von Linearsätzen berechnet. Bei der Bearbeitung mit numerisch gesteuerten industriellen Bearbeitungsmaschinen wie beispielsweise Werkzeugmaschinen führt dieses Vorgehen jedoch zu folgenden Problemen:

Mit steigender Anforderung an die Maßgenauigkeit nimmt die Anzahl der erzeugten Linearsatze und somit auch der Speicherbedarf eines NC-Teileprogramms zu. Die so entstehenden sehr großen Datenmengen müssen in einer numerischen Steuerung jedoch in Echtzeit verarbeitet werden.

Gleichzeitig nimmt die durchschnittliche Wegstrecke je Satz ab. Dadurch wird die erreichbare Vorschubgeschwindigkeit herabgesetzt, was im Widerspruch zur wirtschaftlichen und technologischen Forderung steht, sofern nicht eine leistungsfähigere aber damit auch teuere Hardware eingesetzt wird.

Die Richtungsänderungen an den Satzübergängen führen zu Geschwindigkeits- und Beschleunigungssprüngen in den Maschinenachsen. Diese können auf der Werkstückoberfläche Rattermarken und Riefen verursachen.

Moderne, hoch dynamische Antriebe erzielen heutzutage eine so hohe Bahntreue, daß am Werkstück die einzelnen Linearsätze zu erkennen sind.

Aus Gründen des Schonens der Mechanik der Werkzeugmaschine bzw. eines Roboters zum Erzielen einer verbesserten Oberflächengüte sowie zum Erreichen höherer Vorschubgeschwindigkeitswerte am Werkstück wäre es daher günstiger, wenn die resultierende Bewegungsbahn einen möglichst glatten Kurvenverlauf aufweist. Ein glatter Kurvenverlauf kann durch sogenannte Spline-Verfahren erzeugt werden (diese sind bekannt aus Michaelis, H.: "Interpolations-Verfahren mit natürlichen Polynomen im Hinblick auf Steuerung von Werkzeugmaschinen", VDI-Zeitschrift 104, Nr.35, 1962, Seiten 1806 bis 1813). Dabei können mit Hilfe weniger Stützpunkte der idealen Bewegungsbahn Spline-Abschnitte gebildet werden, die in ihrer Gesamtheit einen äußerst glatten Verlauf der resultierenden Bewegungsbahn ergeben. Die Spline-Funktionen werden mit Standard-Verfahren der Mathematik, z.B. den Verfahren der natürlichen Splines, aus vorgegebenen Stützpunkten oder Linearsatzen berechnet. Verfahrensbeispiele hierzu finden sich in: Keppler, M.: "Führungsgrößenerzeugung für numerisch bahngesteuerte Industrieroboter", Kapitel 2.4.3.

Ein Verfahren, mit dessen Hilfe Linearsatze bei vorgegebener Genauigkeit durch Splines approximiert und dabei möglichst tangenten- oder noch besser krümmungsstetige Satzübergänge erzeugt, bietet folgende Vorteile:

Da in der Regel mehrere Linearsatze durch einen Splinesatz ersetzt werden, wird die durchschnittliche Wegstrecke und damit die erreichbare Vorschubgeschwindigkeit vervielfacht.

Die Reduktion der Linearsatze geht mit einer Verkleinerung des Teileprogramms einher. Damit werden ein geringerer Speicherbedarf und damit auch kürzere Übertragungszeiten zur Steuerung erreicht.

Bei krümmungsstetigen Satzübergängen verlaufen die axialen Beschleunigungen stetig. Dadurch wird die Werkstückoberflächengüte verbessert und die Mechanik in der Bearbeitungsmaschine geschont.

Hierzu sind bereits Verfahren bekannt, bei denen Linearsätze in Teileprogrammen durch Splines ersetzt werden (siehe hierzu die Europäische Patentschrift EP-A-0 384 925). Bei diesem Verfahren wird für jedes Spline-Segment die maximale Anzahl von Linearsätzen ermittelt, die bei vorgegebener Toleranz durch dieses Spline-Segment ersetzt werden können. Die Einhaltung der Lagetoleranz wird nur an den Endpunkten der Linearsatze überprüft. In ungünstigen Situationen verletzen solche Spline-Bahnen daher die vorgegebene Lagetoleranz außerhalb dieser Prüfpunkte. Gewünschte Ecken werden nicht in jedem Fall erkannt. Zwar werden tangentenstetige Satzübergänge durch die Splines erreicht, doch neigt die Spline-Kurve zu unerwünschten Schwingungen. Dabei werden Ecken stets verrundet. Es kommt somit zum "Überschwingen" und dabei zu Verletzungen der Lagetoleranz zwischen den Prüfpunkten.

Aufgabe der vorliegenden Erfindung ist es daher, ein Steuerungsverfahren der eingangs genannten Art so auszubilden, daß mit einer möglichst geringen Anzahl von Spline-Segmenten die anzustrebende Bewegungsbahn nachgebildet wird, dabei jedoch mit Sicherheit auf die Einhaltung der Lagetoleranz in jedem Punkt der Splinebahn geschlossen werden kann. Darüber hinaus sollen nur solche Spline-Kurven erzeugt werden, die nach Möglichkeit krümmungsstetige Satzübergänge besitzen, so daß die axialen Beschleunigungen stetig verlaufen.

Gemäß der Erfindung wird diese Aufgabe durch die folgenden Verfahrensschritte gelöst:
1.1 die durch die Folge von Linearsätzen programmierte Bewegungsbahn wird als lineare B-Spline-Kurve interpretiert, wobei die Kontrollpunkte des B-Splines durch die Satzendpunkte der Linearsatze und der Knotenvektor des B-Splines aus den Punktabstanden gebildet werden,
1.2 die Ordnung der B-Spline-Kurve wird auf größer zwei erhöht, indem Knoten und Kontrollpunkte des B-Splines so vervielfacht werden, daß man eine andere B-Spline-Kurve höherer Ordnung mit gleicher Kontur erhält,
1.3 ein Zähler wird auf Null gesetzt,
1.4 unter den Knoten der aktuellen B-Spline-Kurve wird der ermittelt, der nach folgenden aufeinanderfolgenden Schritten die kleinste Fehlerschranke liefert:
   - ein Knoten wird entfernt,
   - es werden in die so erhaltene neue B-Spline-Kurve alle bislang entfernten Knoten wieder eingefügt,
   - es wird der Abstand des durch Verbinden der Kontrollpunkte der neuen B-Spline-Kurve durch Geraden erhaltenen Kontrollpolygons vom zur unter Schritt 1.2 erhaltenen B-Spline-Kurve auf gleiche Weise bestimmten Ausgangskontrollpolygon als Fehlerschranke bestimmt,
1.5 liegt diese Fehlerschranke unter der vorgegebenen Lagetoleranz, so wird der Knoten, der die kleinste Fehlerschranke liefert, aus der aktuellen B-Spline-Kurve entfernt, der Zähler inkrementiert und wieder auf Schritt 1.4 aufgesetzt,
1.6 sobald die Fehlerschranke die Lagetoleranz erreicht oder überschreitet, wird die der dabei vorliegenden B-Spline-Kurve voranliegende B-Spline-Kurve als interpolierbarer Bewegungsabschnitt akzeptiert und gespeichert.

In einer ersten vorteilhaften Ausgestaltung des Steuerungsverfahrens gemäß der vorliegenden Erfindung wird die Aufbereitung von als NC-Teileprogramme vorliegenden Linearsatzen zur Spline-Approximation vereinfacht. Dies geschieht durch folgenden weiteren Verfahrensschritt:
2.1 die Linearsatze in Form eines NC-Teileprogramms vorliegen und die Splineapproximation für solche Sätze, die außer der Satznummer und Koordinatenangaben weitere NC-Sprachelemente beinhalten, jeweils unterdrückt wird.

In einer weiteren vorteilhaften Ausgestaltung des Steuerungsverfahrens gemäß der vorliegenden Erfindung wird darüber hinaus eine zusätzliche vereinfachende Aufbereitung der Linearsatze erreicht. Dies geschieht durch folgenden weiteren Verfahrensschritt:
3.1 die Linearsatze in Form eines NC-Teileprogramms vorliegen und die Programmanweisungen der zu approximierenden Linearsätze aufgesammelt und in einem Satz ausgegeben werden.

Eine weitere vorteilhafte Ausgestaltung des Steuerungsverfahrens gemäß der vorliegenden Erfindung ist dadurch gekennzeichnet, daß:
4.1 der Lagetoleranzwert als geometrisches Mittel von mehreren an der Bewegungsbahn beteiligten Achsen gebildet wird.

Hierbei handelt es sich um ein generelles Toleranzkriterium, welches einem in seiner Stärke gleichbleibenden Toleranzschlauch entspricht. Wenn dabei Rundachsen bei der industriellen Bearbeitungsmaschine beteiligt sind, so ist eine Rücktransformation der Maschinenkoordinaten in die Werkstückkoordinaten erforderlich.

Eine alternative vorteilhafte Ausgestaltung des Steuerungsverfahrens gemäß der vorliegenden Erfindung ist dadurch gekennzeichnet, daß:
5.1 der Lagetoleranzwert für den jeweiligen Abstand achsspezifisch vorgegeben wird.

Damit werden einzelne Achsen auf das Einhalten einer vorgegebenen Lagetoleranz überprüft. Bei den zugrundeliegenden Lagetoleranzen kann es sich sowohl um Weg- als auch um Winkelwerte handeln.

Beim Begriff Spline wird davon ausgegangen, daß hierunter sowohl eine natürliche Biegekurve, als auch eine gekrümmte Bahn zu verstehen ist, die durch ein Polynom beschreibbar ist.

Weitere Vorteile und Einzelheiten ergeben sich aus der nachfolgenden Beschreibung eines Ausführungsbeispieles im Zusammenhang mit den Figuren. Es zeigen im einzelnen:
- FIG 1: Beispiel einer zweidimensionalen B-Spline-Kurve vierter Ordnung und
- FIG 2: die gleiche B-Spline-Kurve mit konvexer Hülle und
- FIG 3: Ablaufdiagramm zur Bestimmung eines optimalen Spline-Segmentes.

Das neu entwickelte Steuerungsverfahren gemaß der vorliegenden Erfindung macht sich eine besondere Eigenschaft einer Art von Splines zu nutze, welche als Basis-Splines oder auch kurz als B-Splines bezeichnet werden. Solche B-Splines werden definiert durch die Ordnung k, einen Knotenvektor und die Kontrollpunkte. Der Knotenvektor besteht aus einer endlichen, monoton steigenden Folge reeller Zahlen. Aus ihm werden über eine Rekursionsformel sogenannte B-Spline-Basisfunktionen der Ordnung k abgeleitet. Jede dieser Basisfunktionen wird dann mit dem zugeordneten Kontrollpunkt multipliziert. Die Summe über alle Produkte ergibt schließlich die gewünschte B-Spline-Kurve.

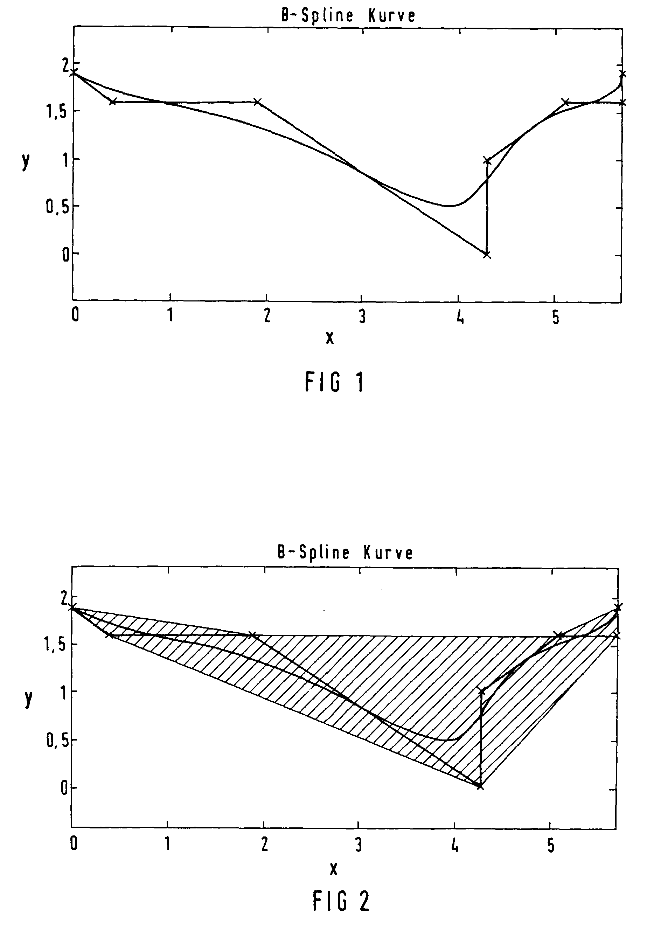

In der Darstellung gemaß FIG 2 ist eine solche B-Spline-Kurve vierter Ordnung (k=4) mit dem Knotenvektor T={0,0,0,0,0.3,0.5,0.8,0.8,1,1,1,1} und den Kontrollpunkten d₀=(0, 1.9), d₁=(0.4, 1.6), d₂=(1.9, 1.6), d₃=(4.3, 0), d₄=(4.3, 1), d₅=(5.1, 1.6), d₆=(5.7, 1.6), d₇=(5.7, 1.9). Diese Kontrollpunkte stellen Raumpunkte x, y der Linearsatze dar.

Die so definierte B-Spline-Kurve ist in einem kartesischen Koordinatensystem mit der Abszisse x und der Ordinate y aufgetragen. Zusätzlich zur B-Spline-Kurve sind auch die Kontrollpunkte d₀ bis d₇ durch Geraden verbunden. Man spricht dabei auch von einem sogenannten "Kontrollpolygon".

Die im vorangehenden zitierte besondere Eigenschaft der B-Splines, welche sich die vorliegende Erfindung zunutze macht, indem sie für die Überprüfung der Einhaltung der Lagetoleranz herangezogen wird, ist die sogenannte "convex-hull-property". Diese besagt, daß ein Segment der B-Spline-Kurve in der konvexen Hülle der zugehörigen k benachbarten Kontrollpunkte liegt (k ist die Ordnung der zugrundeliegenden B-Spline-Kurve).

In der Darstellung gemäß FIG 2 ist eine solche konvexe Hülle zu der der Darstellung gemäß FIG 1 gezeigten B-Spline-Kurve gezeigt. Diese konvexe Hülle ergibt sich, indem alle Kontrollpunkte d₀ bis d₇ durch Geraden miteinander verbunden sind und die so gebildeten einzelnen Flachen addiert werden. Die so erhaltene Gesamt flache ist in der Darstellung gemaß FIG 2 als schraffierte Fläche dargestellt. Man erkennt, daß die entsprechende B-Spline-Kurve vierter Ordnung stets innerhalb dieser konvexen Hülle verläuft.

Eine zentrale Erkenntnis des Steuerungsverfahrens gemaß der vorliegenden Erfindung liegt nun darin, daß zunächst die Linearsatze, welche durch ein Spline-Segment approximiert werden sollen, als Kontrollpolygon eines B-Splines zweiter Ordnung interpretiert werden. Die B-Spline-Kurve zweiter Ordnung, also eine lineare B-Spline-Kurve, ist jedoch stets identisch mit ihrem Kontrollpolygon und damit mit den Linearsatzen. Durch ein geeignetes Vervielfachen der Kontrollpunkte d und Knoten T läßt sich nun die Ordnung k der linearen B-Spline-Kurve B auf einen Wert k>2 bringen, ohne daß der Bahnverlauf dadurch beeinflußt wird (man spricht in diesem Zusammenhang auch von einer konturerhaltenden Graderhöhung).

Auf diese Weise erhält man eine B-Spline-Kurve B₀ der Ordnung k>2, deren Bahn identisch zu den zu approximierenden Linearsatzen ist und welche auch ebenso viele Segmente enthält. Um die Anzahl der Linearsatze zu reduzieren, entfernt man je einen Knoten T und einen Kontrollpunkt d und enthält dadurch die B-Spline-Kurve B₁. Diese Operation verändert jedoch den Bahnverlauf mehr oder weniger stark in der Nähe des entfernten Kontrollpunkts.

Um eine Abschätzung der Bahnabweichung zu erhalten, fügt man nun den entfernten Knoten wieder in die B-Spline-Kurve B₁ ein. Diese Operation ist wiederum bahnerhaltend bzw. konturerhaltend. Auf diese Art und Weise entsteht ein neues Kontrollpolygon mit gleich vielen Kontrollpunkten wie bei B₀. Die Differenz zwischen den beiden B-Spline-Kurven B₁ und B₀ laßt sich wegen der bereits angesprochenen "convex-hull-property" abschätzen, indem man den maximalen Abstand der Kontrollpolygone von B₁ und B₀ voneinander ermittelt. Dieser Abstand läßt sich mit herkömmlichen mathematischen Methoden schnell und ohne großen Aufwand berechnen, da sich die beiden Kontrollpolygone nur in einem Kontrollpunkt unterscheiden. Dieser ermittelte Abstand ist eine obere Schranke für die maximale Abweichung von B₁ zu B₀.

Die im vorangehenden beschriebenen Schritte:
1. Entfernen eines Knotens führt zu einer neuen B-Spline-Kurve (konturverandernde Operation)
2. Einfügen des gleichen Knotens in die neue B-Spline-Kurve (konturerhaltende Operation) und
3. Berechnung des maximalen Abstands der Kontrollpolygone als obere Fehlerschranke F
werden nun für jeden einzelnen Knoten durchgeführt. Unter allen Knoten wird dann der mit der kleinsten, oberen Fehlerschranke F gesucht und entfernt, falls die Fehlerschranke kleiner als die vorgegebene Lagetoleranz L ist.

Schrittweise werden nun jeweils
4. ein Knoten mehr entfernt (konturverandernde Operation),
5. wieder so viele Knoten in die neue B-Spline-Kurve eingefügt, daß der Knotenvektor T mit dem der Ausgangskurve Bo identisch ist (konturerhaltende Operation) und
6. der maximale Abstand der Kontrollpolygone als obere Fehlerschranke F berechnet.

Dabei wird stets darauf geachtet, daß diejenigen Knoten entfernt werden, für die die Fehlerschranke F minimal ausfällt. Iterativ werden nun weitere B-Spline-Kurven B₂, B₃, etc. wie in den vorangehenden beschriebenen Schritten 4 bis 6 ermittelt. Diese Vorgehensweise wird erst dann abgebrochen, falls durch das Entfernen jedes übrigen Knotens die Fehlerschranke F die vorgegebene Lagetoleranz L überschreitet.

Mit jedem entferntem Knoten wird die dadurch erhaltene B-Spline-Kurve Bₘ entweder um einen Satz kürzer oder glatter, d.h. aus einer Ecke wird ein tangentenstetiger Übergang, aus einem tangentenstetigem Übergang wird ein krümmungsstetiger Übergang.

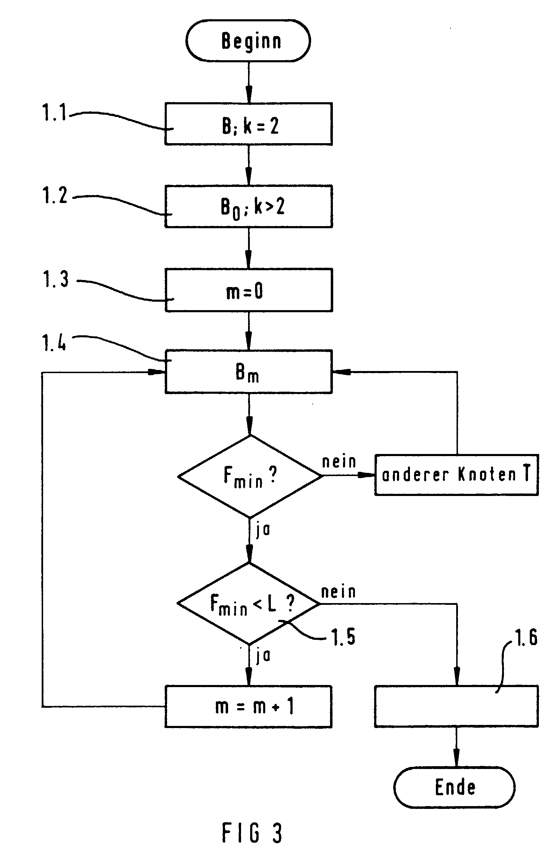

In der Darstellung gemäß FIG 3 ist ein Ablaufdiagramm gezeigt, mit dem die im vorangehenden dargestellten Verfahrensschritte veranschaulicht werden. Dabei sind die einzelnen Verfahrensschritte mit den Merkmalsnumerierungen 1.1 bis 1.6 bezeichnet, wie sie dem unabhängigen Verfahrensanspruch zugrundeliegen.

In einem ersten Verfahrensschritt 1.1 wird die programmierte Bewegungsbahn, welche in Form von Linearsätzen vorliegt, als lineare B-Spline-Kurve B interpretiert. Dabei werden als Kontrollpunkte gerade die Satzendpunkte der Linearsatze zugrundegelegt, der Knotenvektor T wird aus den Punktabstanden gebildet. In einem darauffolgenden Verfahrensschritt 1.2 wird die Ordnung der B-Spline-Kurve auf k>2 erhöht, indem in einer konturerhaltenden Operation die Knoten und Kontrollpunkte vervielfacht werden. Auf diese Weise wird eine neue B-Spline-Kurve B₀ erhalten.

In einem weiteren Verfahrensschritt 1.3 wird ein Zähler m auf den Wert 0 gesetzt. Daran anschließend wird in einem weiteren Verfahrensschritt 1.4 die eigentliche Operation der Bestimmung eines geeigneten Spline-Segmentes vorgenommen, indem die bereits im vorangehenden unter den Punkten 1. bis 6. beschriebenen Maßnahmen durchgeführt werden. So wird unter den Knoten der B-Spline-Kurve Bₘ der Knoten gesucht, der nach den folgenden Schritten die kleinste Fehlerschranke F liefert.
- Entferne einen Knoten
- Fuge in die neue B-Spline-Kurve alle bislang entfernten Knoten wieder ein
- Berechne den Abstand des Kontrollpolygons zum Ausgangspolygon von B₀ als Fehlerschranke F.

Das hat zur Folge, daß unter allen Knoten stets derjenige mit der kleinsten oberen Fehlerschranke gesucht und entfernt wird. Dazu werden die dem Verfahrensschritt 1.4 zugrundeliegende Maßnahmen für jeden einzelnen Knoten durchgeführt. In einem daran anschließenden Verfahrensschritt 1.5 wird überprüft ob die ermittelte minimale Fehlerschranke Fₘᵢₙ kleiner als die vorgegebene Lagetoleranz L ist. Ist dies der Fall, so wird der zu Fₘᵢₙ gehörende Knoten aus der B-Spline-Kurve Bₘ entfernt und der Zähler m inkrementiert, indem m=m+1 gesetzt wird. Anschließend wird der Verfahrensschritt 1.4 wiederholt. Sobald jedoch die Fehlerschranke F die Lagetoleranz L erreicht oder die Lagetoleranz L überschreitet, so wird die der dabei vorliegenden B-Spline-Kurve Bₘ voranliegende B-Spline-Kurve Bₘ₋₁ als interpolierbarer Bewegungsabschnitt akzeptiert und gespeichert.

Auf diese Art und Weise wird jeweils für jedes Teileprogrammsegment, also eine ausgewählte Folge von Linearsätzen, zwischen zwei Markierungen ein geeignetes Spline-Segment bestimmt, wodurch der erforderliche Speicherbedarf des Teileprogrammes verringert wird und darüber hinaus jederzeit die Einhaltung der vorgegebenen Lagetoleranz in jeden Punkt des Splinebahn gewährleistet wird. Sind auf diese Weise für alle Teileprogrammsegmente, somit also für alle dem Teileprogramm zugrundeliegenden Linearsatze, geeignete Spline-Segmente bestimmt und gespeichert worden, so wird über die Gesamtheit der aneinandergesetzten Spline-Segmente interpoliert und auf diese Weise die numerisch gesteuerte Bearbeitungsmaschine, beispielsweise eine Werkzeugmaschine, angesteuert. Die gemäß den im vorangehenden dargestellten Verfahrensschritten ermittelten und akzeptierten Spline-Segmente bilden somit in ihrer Abfolge die ideale Bewegungsbahn ab, wobei jederzeit gewährleistet ist, daß eine vorgegebene Lagetoleranz L zu der idealen Bewegungsbahn eingehalten wird.

Die Anzahl der Koordinaten eines linearen Feinwegabschnittes ist nicht auf drei (d.h. x,y,z) begrenzt. Damit ist das Steuerungsverfahren auch auf NC-Teileprogramme für fünfachsige Werkzeugmaschinen oder sechsachsige Roboter anwendbar. Darüber hinaus können zusätzliche synchrone Bewegungsachsen, z.B. Hilfsachsen, Transportbänder, etc. in die Splineapproximation einbezogen werden.

## Patentansprüche

1. Steuerungsverfahren zur Bewegungsführung einer numerisch gesteuerten industriellen Bearbeitungsmaschine wie einer Werkzeugmaschine, einem Roboter oder dergleichen, wobei eine ideale Bewegungsbahn in unmittelbar aufeinanderfolgende lineare Feinwegabschnitte, sogenannte Linearsätze, aufgelöst ist, zu denen Raumpunkte (x,y,z) sämtlicher Orte der idealen Bewegungsbahn gespeichert vorliegen, wobei die Linearsätze durch Splines approximiert werden, indem Splinesegmente als interpolierbare Bewegungsabschnitte bestimmt werden, wobei sich die Gesamtheit der aneinandergefügten Splinesegmente mit einer vorgebbaren Lagetoleranz an die ideale Bewegungsbahn annähert, **dadurch gekennzeichnet**, daß für jede durch ein Splinesegment zu approximierende Folge von Linearsätzen zwischen zwei Markierungen die folgenden Verfahrensschritte durchgeführt werden:
1.1 die durch die Folge von Linearsätzen programmierte Bewegungsbahn wird als lineare B-Spline-Kurve (B) interpretiert, wobei die Kontrollpunkte (x,y,z) des B-Splines durch die Satzendpunkte der Linearsätze und der Knotenvektor des B-Splines aus den Punktabständen gebildet werden,
1.2 die Ordnung der B-Spline-Kurve (B) wird auf größer zwei erhöht, indem Knoten und Kontrollpunkte des B-Splines so vervielfacht werden, daß man eine andere B-Spline-Kurve (B0) höherer Ordnung mit gleicher Kontur erhält,
1.3 ein Zähler (m) wird auf Null gesetzt,
1.4 unter den Knoten der aktuellen B-Spline-Kurve (Bm) wird der ermittelt, der nach folgenden aufeinanderfolgenden Schritten die kleinste Fehlerschranke liefert:
- ein Knoten wird entfernt,
- es werden in die so erhaltene neue B-Spline-Kurve alle bislang entfernten Knoten wieder eingefügt,
- es wird der Abstand des durch Verbinden der Kontrollpunkte der neuen B-Spline-Kurve durch Geraden erhaltenen Kontrollpolygons (Km) vom zur unter Schritt 1.2 erhaltenen B-Spline-Kurve auf gleiche Weise bestimmten Ausgangskontrollpolygon (K0) als Fehlerschranke (F) bestimmt,
1.5 liegt diese Fehlerschranke (F) unter der vorgegebenen Lagetoleranz, so wird der Knoten, der die kleinste Fehlerschranke liefert, aus der aktuellen B-Spline-Kurve (Bₘ) entfernt, der Zähler (m) inkrementiert (m=m+1) und wieder auf Schritt 1.4 aufgesetzt,
1.6 sobald die Fehlerschranke die Lagetoleranz erreicht oder überschreitet, wird die der dabei vorliegenden B-Spline-Kurve (Bm) voranliegende B-Spline-Kurve (Bm-1) als interpolierbarer Bewegungsabschnitt akzeptiert und gespeichert.

2. Steuerungsverfahren nach Anspruch 1, **dadurch gekennzeichnet,** daß
2.1 die Linearsätze in Form eines NC-Teileprogramms vorliegen und die Splineapproximation für solche Sätze, die außer der Satznummer und Koordinatenangaben (x,y,z) weitere NC-Sprachelemente beinhalten, jeweils unterdrückt wird.

3. Steuerungsverfahren nach Anspruch 1 oder 2, **dadurch gekennzeichnet,** daß
3.1 die Linearsatze in Form eines NC-Teileprogramms vorliegen und die Programmanweisungen der zu approximierenden Linearsatze aufgesammelt und in einem Satz ausgegeben werden.

4. Steuerungsverfahren nach Anspruch 1, 2 oder 3, **dadurch gekennzeichnet**, daß
4.1 der Lagetoleranzwert als geometrisches Mittel von mehreren an der Bewegungsbahn beteiligten Achsen gebildet wird.

5. Steuerungsverfahren nach Anspruch 1, 2 oder 3, **dadurch gekennzeichnet,** daß
5.1 der Lagetoleranzwert für den jeweiligen Abstand achsspezifisch vorgegeben wird.

## Claims

1. Control method for guiding a motion of a numerically controlled industrial manufacturing machine such as a machine tool, robot or the like, an ideal trajectory being broken up into directly successive linear fine path sections, so-called linear blocks, for which tool centre points (x, y, z) of all locations of the ideal trajectory are stored, the linear blocks being approximated by splines, in that spline segments are defined as interpolatable motion sections, the totality of the spline segments joined together approximating with a predeterminable positional tolerance to the ideal trajectory, characterized in that for each sequence of linear blocks between two markings to be approximated by a spline segment, the following method steps are carried out:
1.1 The trajectory programmed by the sequence of linear blocks is interpreted as a linear B-spline curve (B), the control points (x, y, z) of the B-spline being formed by the block end points of the linear blocks and the node vector of the B-spline being formed by the distances between the points,
1.2 the order of the B-spline curve (B) is increased to more than two by multiplying nodes and control points of the B-spline such that another B-spline curve (B0) of a higher order is obtained with the same contour,
1.3 a counter (m) is set to zero;
1.4 from among the nodes of the current B-spline curve (Bm), the node is ascertained which provides the smallest error limit after the following consecutive steps:
- one node is removed,
- all nodes removed previously are reinserted into the new B-spline curve thus obtained,
- the distance of the control polygon (Km) obtained by connecting the control points of the new B-spline curve by straight lines from the original control polygon (K0) determined in the same manner for the B-spline curve obtained in step 1.2 is determined as the error limit (F);
1.5 if this error limit (F) is below the predetermined positional tolerance, then the node which gives the smallest error limit is removed from the current B-spline curve (Bₘ), the counter (m) is incremented (m=m+1) and again set to step 1.4;
1.6 as soon as the error limit reaches or exceeds the positional tolerance, the B-spline curve (Bm-1) ahead of the B-spline curve (Bm) which is then present is accepted as an interpolatable motion section and stored.

2. Control method according to claim 1, characterized in that
2.1 the linear blocks are present in the form of an NC part program and spline approximation for blocks which contain further NC language elements other than the block number and coordinate information (x, y, z) is suppressed in each case.

3. Control method according to claim 1 or 2, characterized in that
3.1 the linear blocks are present in the form of an NC part program and the program instructions of the linear blocks to be approximated are collected and output in one block.

4. Control method according to claim 1, 2 or 3, characterized in that
4.1 the positional tolerance value is formed as the geometric mean of several axes participating in the trajectory.

5. Control method according to claim 1, 2 or 3, characterized in that
5.1 the positional tolerance value for the respective distance is predetermined in an axis-specific manner.

## Revendications

1. Procédé de commande du déplacement d'une machine d'usinage industrielle à commande numérique, par exemple une machine-outil, un robot ou analogues, une trajectoire de déplacement idéale étant décomposée en tronçons de trajets précis linéaires contigus, appelés blocs linéaires, pour lesquels des points dans l'espace (x, y, z) de tous les lieux de la trajectoire de déplacement idéale sont présents en mémoire, les blocs linéaires étant approchés par approximation avec des fonctions splines du fait que des segments de splines sont déterminés comme tronçons de déplacement interpolables, la totalité des segments splines juxtaposés s'approchant de la trajectoire de déplacement idéale avec une tolérance de position pouvant être prescrite, caractérisé par le fait que, pour chaque suite de blocs linéaires à approcher par un segment spline entre deux repères, on effectue les étapes suivantes du procédé :
1.1 on interprète la trajectoire de déplacement programmée par la suite de blocs linéaires comme une courbe spline de base (B) linéaire, les points de contrôle (x, y, z) de la spline B étant formés par les points d'arrivée des blocs linéaires et le vecteur de sommets de la spline B étant formé à partir des distances entre points,
1.2 on augmente l'ordre de la courbe spline de base (B) à une valeur supérieure à 2 en multipliant sommets et points de contrôle de la spline B de manière à obtenir une autre courbe spline de base (B₀) d'ordre supérieur ayant le même contour,
1.3 on met à zéro un compteur (m),
1.4 parmi les sommets de l'actuelle courbe spline de base (Bₘ), on détermine celui qui fournit la plus petite limite d'erreur après les étapes successives suivantes :
- on élimine un sommet,
- on réintroduit dans la nouvelle courbe spline B ainsi obtenue tous les sommets éliminés jusqu'alors,
- on détermine comme limite d'erreur (F) la distance du polygone de contrôle (Km), obtenu en reliant par des droites les points de contrôle de la nouvelle courbe spline B, au polygone de contrôle initial (K₀), déterminé de la même manière pour la courbe spline B obtenue à l'étape 1.2,
1.5 si cette limite d'erreur (F) est inférieure à la tolérance de position prescrite, on élimine de la courbe spline de base actuelle (Bₘ) le sommet qui fournit la plus petite limite d'erreur, on incrémente (m = m + 1) le compteur (m) et on revient à l'étape 1.4,
1.6 dès que la limite d'erreur atteint ou dépasse la tolérance de position, on accepte et mémorise comme tronçon de déplacement interpolable la courbe spline de base (Bₘ₋₁) précédant la courbe spline de base (Bₘ) présente.

2. Procédé de commande selon la revendication 1, caractérisé par le fait que
2.1 on a les blocs linéaires sous la forme d'un programme de pièce en commande numérique et on supprime à chaque fois l'approximation spline pour des blocs qui contiennent outre le numéro de bloc et des indications de coordonnées (x, y, z) d'autres éléments de langage de commande numérique.

3. Procédé de commande selon la revendication 1 ou 2, caractérisé par le fait que
3.1 on a les blocs linéaires sous la forme d'un programme de pièce en commande numérique et on rassemble et sort dans un bloc les instructions de programme des blocs linéaires à approcher.

4. Procédé de commande selon la revendication 1, 2 ou 3, caractérisé par le fait que
4.1 on forme la valeur de tolérance de position comme étant la moyenne géométrique de plusieurs axes concernés par la trajectoire de déplacement.

5. Procédé de commande selon la revendication 1, 2 ou 3, caractérisé par le fait que
5.1 on prescrit spécifiquement pour chaque axe la valeur de tolérance de position pour la distance respective.
